# FASCICULE DE BREVET EUROPEEN

(11) **EP 1 205 069 B1**
(45) Date de publication et mention de la délivrance du brevet: **17.09.2003**
(21) Numéro de dépôt: 00945852.2
(22) Date de dépôt: 30.06.2000
(51) Int. Cl.: H04N 7/16

(54) **METHODE ET DISPOSITIF DE FILTRAGE D'INFORMATION**
VERFAHREN UND VORRICHTUNG ZUR FILTERUNG VON DATEN
METHOD AND DEVICE FOR FILTERING INFORMATION

(30) Priorité: 13.08.1999 CH 148099
(43) Date de publication de la demande: 15.05.2002
(73) Titulaire: Nagravision SA, 1033 Cheseaux-sur-Lausanne (CH)
(72) Inventeur: BERTHOLET, Patrick, CH-1004 Lausanne (CH)
(74) Mandataire: Wenger, Joel-Théophile
(86) Numéro de dépôt international: EP0006100
(87) Numéro de publication internationale: WO01013633

(56) Documents cités:
- EP-A- 0 849 948
- EP-A- 0 862 328
- US-A- 5 485 221
- US-A- 5 798 785
- US-A- 5 822 123

## Description

La présente invention est relative au domaine de la télévision à péage, et en particulier concerne une méthode de filtrage des données à transmettre pour affichage.

Il est connu, dans le domaine de la télévision à péage, des guides électroniques de programme qui proposent à un utilisateur la possibilité de visualiser l'ensemble des programmes proposés sur la totalité des chaînes, payantes ou non, qu'il est susceptible de recevoir et où il pourra choisir de visionner gratuitement ou d'acheter une émission, encore appelé événement. Un tel événement peut être une compétition ou manifestation sportive, un documentaire animalier, un épisode de feuilleton télévisé, un journal, un film policier, cette liste étant évidemment non exhaustive. Cependant, ces guides électroniques de programme obligent l'utilisateur à se promener à travers les chaînes, les bouquets de programmes, et les jours pour arrêter son choix. Leur emploi est donc fastidieux pour l'utilisateur qui sait déjà en grande partie ce qu'il cherche.

Des entreprises telles que IMDB (Internet Movie Data Base) mettent à disposition du public des informations (telles que le nom des acteurs, l'affiche, le générique...) sur un grand nombre de films proposés sur les écrans. Des caractéristiques de l'offre de telles entreprises sont disponibles sur le site Internet http://www.imdb.com. Cependant, ces informations ne renseignent pas le téléspectateur qui veut visionner un film sur l'offre disponible à un instant donné, pour les heures qui suivent, sur son poste de télévision.

Le document US 5798785 décrit une méthode pour organiser les données dans la grille de programme afin de faciliter le tri parmi un grand nombre d'informations. La solution proposée par ce document est l'apprentissage pour un utilisateur donné, de ses préférences et habitudes.

Ce document décrit un décodeur qui reçoit et traite une grande quantité de données à l'aide d'un programme complexe chargé dans une mémoire du décodeur. L'utilisateur effectue des choix d'émissions avec sa télécommande à partir d'une grille affichée sur l'écran du téléviseur. La sélection des émissions peut être personnalisée et se modifie automatiquement selon les habitudes de l'utilisateur.

L'inconvénient majeur de la méthode décrite est que le décodeur nécessite un grand nombre de fonctions de tri et de codage des émissions destinées à l'affichage dans la grille, du fait de la grande quantité d'information transmise par le centre de gestion. De plus, les ressources en général limitées du décodeur ne permettent pas d'atteindre une vitesse de traitement suffisante.

Il reste donc un problème non résolu de façon satisfaisante à ce jour pour le téléspectateur qui désire, à l'aide de sa télécommande, se retrouver dans la foison des programmes qui lui sont proposés, et en particulier de faire le tri dans ces données.

Le but visé par la présente invention est atteint par une méthode de filtrage d'informations à partir d'un flux de données comprenant les informations audio, vidéo et de contrôle transmises par un centre de gestion à une pluralité de récepteurs de télévision à péage basée sur le tri des d'informations textuelles destinées à l'affichage de grilles de programmes télévisuels, lesdits récepteurs comprenant un décodeur vidéo de texte, des entrées de commandes et une mémoire de paramètres utilisateur, cette grille étant composée à partir d'un premier jeu d'information textuelles issu des données de contrôle décrivant une émission et comprenant son index, la description du contenu, les droits d'accès, la langue, caractérisée en ce qu'elle consiste à :
- composer au moins un second jeu d'information définissant une table d'index par le centre de gestion regroupant les index des émissions remplissant au moins un critère de tri prédéfini,
- ajouter les données définissant la table aux données de contrôle du flux
- transmettre au récepteur de télévision à péage lesdites données de contrôle comprenant ladite table d'index,
- mémoriser ladite table d'index dans la mémoire du récepteur,
- appliquer les paramètres de la table d'index à une unité de filtrage de texte du décodeur vidéo de texte si le critère de tri correspond avec celui désiré par l'utilisateur,
- recevoir les informations sortant de l'unité de filtrage de texte et les utiliser pour la préparation de l'affichage d'une grille de programmes.

Chaque émission comprend un code dans lequel est décrit ses caractéristiques importantes telles que le canal sur lequel elle sera diffusée, le type d'abonnement auquel elle est rattachée, l'âge minimum conseillé et la date et l'heure de la diffusion.

Par paramètres de l'utilisateur, on entend l'ensemble des paramètres qui permettent de définir un utilisateur tels que le type d'abonnement auquel il a souscrit, la ou les catégories d'âge minimum des émissions qu'il souhaite voir, ainsi que des paramètres qui permettent de définir le profil de l'utilisateur basé sur ses précédents achats.

De ce fait, plus l'utilisateur utilisera son système, plus le navigateur sera à même de lui proposer prioritairement les émissions susceptibles de l'intéresser.

L'information présentée par le navigateur est filtrée dans le sens où l'utilisateur gagne un temps important par rapport à l'exemple d'un guide électronique de programmes. Dans un premier exemple, seules apparaissent les émissions auxquelles il a une possibilité d'accès. Les chaînes ou bouquets de programmes auxquels il ne s'est pas abonné n'apparaissent pas à l'écran et ne viennent pas perturber son processus de choix. De même, le navigateur tient compte des soucis d'économie de l'utilisateur qui tiendrait par exemple à profiter des offres ou actions spéciales à saisir dans les prochaines heures télévisuelles.

Dans une première forme de réalisation de l'invention, le navigateur fonctionne en mode plein écran, en étant déconnecté d'une émission en cours regardée par l'utilisateur. Dans cette forme, l'utilisateur est principalement occupé à choisir l'émission qu'il préférera à l'intérieur d'une offre présentée par l'intermédiaire du navigateur. Une information importante pour l'utilisateur concerne les émissions à démarrages successifs, c'est-à-dire qu'un film d'une durée de par exemple une heure et demie va démarrer tous les quarts d'heure selon un cycle de passage, chaque cycle de passage étant séparé des autres cycles de passage (au nombre de cinq dans cet exemple) par un multiple de 15 minutes. Selon le temps à disposition, la durée des films proposés, leur prix, et l'imminence du début du prochain cycle, l'utilisateur pourra faire son choix et s'installer confortablement pour passer une bonne soirée.

Sur la base des paramètres utilisateurs, le navigateur va sélectionner les différentes offres spéciales en rapport avec le domaine favori de l'utilisateur. En effet, si les émissions sportives ont été consommées fréquemment, il y a de fortes chances que l'utilisateur soit réceptif à une offre de diffusion d'un match de football.

Dans un mode particulier relatif à cette première forme, le navigateur propose, sous forme de menu, des éléments tels qu'une liste des programmes démarrant prochainement, une liste complète des films disponibles à l'achat impulsif, une liste des actions commerciales et offres spéciales à prix réduit au moment de la consultation, une liste des films déjà achetés par l'utilisateur concerné, un contrôle parental, la possibilité de lire des informations système ainsi que le choix de la langue dans laquelle sont proposés ces éléments.

La liste des programmes démarrant prochainement s'appelle couramment les "beginning soon". L'information présentée comprend notamment le temps restant jusqu'au début de l'émission, indiqué en général en minutes.

La liste complète des films proposés à l'achat impulsif s'appelle généralement "All the movies". Elle comprend surtout des films, c'est-à-dire des émissions dont l'intérêt persiste après un certain temps, contrairement aux journaux télévisés ou aux cours de la bourse par exemple qui vieillissent mal, en ce sens qu'après quelques jours leur intérêt n'est plus qu'anecdotique. Cette liste est épurée et ne comprend en général pas les films dont la vision est interdite à l'utilisateur pour certaines raisons. Ces raisons peuvent avoir leur origine dans des lois nationales de certains pays, dans lesquels la diffusion d'une manifestation sportive est interdite dans une zone définie autour du stade où elle a lieu, ceci afin de ne pas détourner indûment la clientèle potentielle des organisateurs de cette manifestation dans ce stade.

La liste "all the movies" peut être présentée soit par films (by movies mode), auquel cas la liste est une liste d'occurrences d'un film diffusé sur les diverses chaînes et dans les prochains jours, ou encore par jours (by days mode), à la manière d'un programme de télévision classique sur support papier dans lequel seules certaines émissions ou films seraient sélectionnés.

Dans le but de tenter l'utilisateur en lui faisant miroiter la possibilité de visionner par exemple un film très coté et récemment sorti dans les salles, mais à prix spécial, le navigateur selon l'invention propose dans le menu une liste des actions commerciales, couramment appelées "Big deals", accompagnées de leur prix spécial, et éventuellement de la durée de validité de l'offre.

Le but de la liste des films déjà achetés, couramment appelée "purchased movies", est de renseigner l'utilisateur sur ses derniers achats, afin de lui permettre de suivre l'état de son compte et éventuellement de réfréner une éventuelle boulimie télévisuelle. Dans le cas d'un téléviseur familial, il peut servir aux parents à contrôler la consommation télévisuelle de leurs enfants.

Le but du contrôle parental proposé par le navigateur selon l'invention est de permettre aux parents d'affiner le choix des films proposés à l'achat impulsif, en fonction de leur rating, éventuellement au moyen d'un code d'accès. On appelle rating une qualification des films proposée par des organismes officiels ou para-étatiques se donnant pour but de protéger la jeunesse contre certains types de films. Dans ce contexte, les parents qui le désirent pourront par exemple limiter l'offre à 12+, c'est-à-dire autoriser uniquement la présentation et l'achat de films ou d'émissions autorisées pour les personnes de plus de douze ans. Si les parents ont parmi leurs enfants un adolescent auquel ils permettent de regarder certains films, le reste de la fraterie étant considérée comme trop jeune pour les visionner, ils pourront faire confiance à cet aîné pour lui permettre de regarder, ses cadets étant couchés, un film de son choix en lui confiant le code d'accès. Ils pourront également laisser une certaine liberté à cet adolescent en matière de choix de films à l'intérieur d'un budget, au moyen d'un code d'accès spécifique à cet adolescent. La connaissance du code permet en effet de facilement retracer le coût total des achats effectués au moyen de ce code.

Le contrôle parental peut aussi, dans une forme particulière de réalisation de l'invention, s'effectuer par un filtrage programmé par les parents eux-mêmes. Ceci est utile par exemple lorsque les parents ne désirent pas suivre la recommandation de rating faite par les organismes précités, par exemple pour un film précis sur lequel ils se seraient faits un jugement par eux-mêmes.

La possibilité de lire des informations système est utile pour redémarrer le système en cas d'incident. Une simple lecture de ces informations permet de renseigner un préposé à la maintenance du système sur l'identificateur de l'abonné, et ceci à distance.

Le choix de la langue est particulièrement utile dans le cas où le marché télévisuel est pluri-ethnique ou pluri-linguistique.

Dans une forme particulière de réalisation de l'invention, le navigateur permet à l'utilisateur de définir le type de rappel. Le rappel est à interpréter au sens de l'anglais "reminder". Un premier type de rappel est un rappel quelques secondes avant le début de l'émission prévue du film, l'utilisateur ayant alors encore le choix de ne pas visionner le film qu'il a acheté quelque temps auparavant. Une des fonctions du navigateur selon l'invention peut alors annuler le débit du compte si l'émission n'est effectivement pas visionnée, au cas où l'utilisateur change d'avis.

Un autre type de rappel consiste à forcer d'avance l'occupation de l'écran. Ce dernier type peut être choisi par l'utilisateur lorsqu'il est certain, au moment de l'achat, que l'émission achetée aura priorité sur toute autre qu'il serait en train de visionner lorsqu'elle débutera.

De telles caractéristiques permettent à l'utilisateur de programmer une soirée télévisuelle, ce programme ou cette ébauche de programme étant librement interruptible en cas de proposition inopinée d'un proche, par exemple pour une sortie en ville.

Dans une seconde forme de réalisation de l'invention, le navigateur fonctionne en marge d'une émission en cours, regardée par le téléspectateur. Cette forme est davantage adaptée aux utilisateurs enclins au "zapping", c'est-à-dire aux utilisateurs toujours à l'affût d'une émission plus intéressante que celle qu'ils regardent. Dans cette forme, appelée Present/Following, les informations présentées par le navigateur n'occupent qu'une partie de l'écran du téléviseur, par exemple la partie inférieure. Elles concernent notamment l'émission en cours sur la chaîne regardée, la prochaine émission sur cette même chaîne, des données chronologiques telles que le temps restant jusqu'à la fin de l'émission et la durée totale de l'émission, ainsi que les émissions en cours sur les autres chaînes, payantes ou non. Pour ces émissions, les informations fournies peuvent concerner les données chronologiques précitées, le nom ou la marque de la chaîne, ainsi qu'un descriptif de l'émission de préférence choisi dans la langue de l'émission. Ce descriptif peut mentionner toutes les caractéristiques de l'émission susceptibles de captiver l'utilisateur. Par exemple, si l'émission est un documentaire sur une usine de fabrication, la nature de cette fabrication pourra être mentionnée.

Dans une forme particulière de réalisation de l'invention, l'émission peut présenter un intérêt supplémentaire pour l'utilisateur si des données spécifiques sont affichées à l'écran en même temps que la représentation de l'action. Ainsi, dans une compétition sportive de vitesse, la vitesse instantanée du concurrent filmé est calculée sur le lieu de la compétition et est donc techniquement disponible pour un affichage. Cet affichage peut être activé seulement si l'utilisateur a choisi la version correspondante "avec données" de l'émission sportive considérée, moyennant un prix différent perçu par le fournisseur de bouquet de programmes dans le cas d'une offre payante. Dans ce cas, l'information synthétique peut comprendre une indication comme quoi la version "avec données" peut être achetée. Ceci peut être fait en masquant, par brouillage délibéré, une partie non centrale de l'écran où s'afficheraient ces données intéressantes supplémentaires. Comme on l'aura compris, la présente invention permet de favoriser l'achat impulsif de programmes télévisuels.

Il est notoire que lors d'une offre pléthorique de programmes télévisuels, le décodeur vidéo ne peut traiter toutes les informations relatives à la description de chaque émission lorsque l'on désire introduire des critères élaborés de tri. Les capacités de transmissions vidéo permettent de transmettre plus d'une centaine de chaînes simultanément. Pour chaque chaîne, les émissions affichées sur le guide électronique de programme peuvent représenter une cinquantaine d'entrées pour une période de 12 heures. C'est à travers parmi plus de 5000 messages d'information sur les émissions que devrait s'effectuer le tri dans une optique idéale. Dans la pratique, les décodeurs actuels ne sont pas équipés pour trier dans un temps acceptable une telle masse d'informations et c'est pourquoi le décodeur vidéo dispose d'un filtre pour effectuer une première sélection de ces informations.

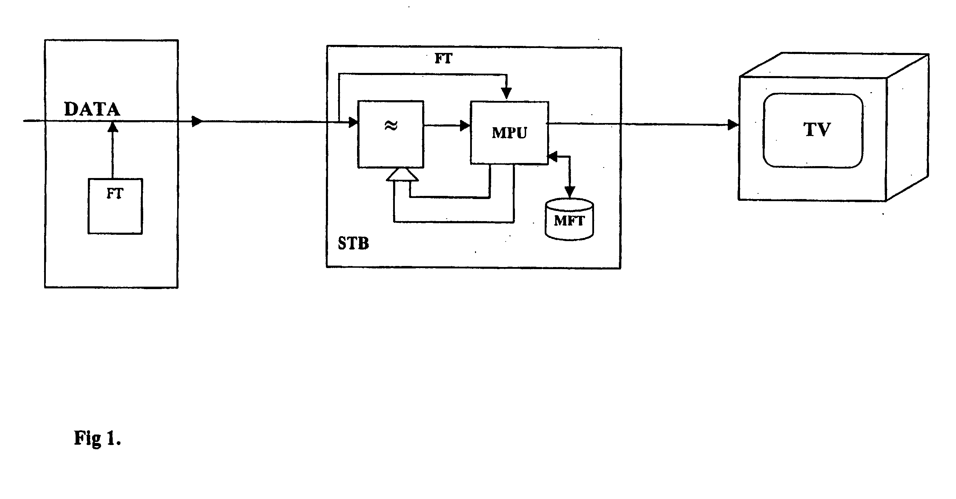

L'invention sera mieux comprise grâce à la description détaillée qui va suivre et qui se réfère au dessin annexé qui est donné à titre d'exemple nullement limitatif, dans lequel la figure unique représente le système selon l'invention.

Sur la figure annexée, le flux de données DATA comprend les informations audio, vidéo et de contrôle. Dans ces données de contrôle sont ajoutés les données FT comprenant les tables d'index permettant un accès rapide aux informations de tri.

A la réception, le décodeur STB comprend un premier niveau qui agit comme un filtre "hardware" c'est-à-dire qu'il ne laisse passer que les messages correspondants au profil chargé dans ce filtre. Le paramétrage de ce filtre est défini par l'unité de gestion MPU du décodeur STB. Les informations contenant la table d'index FT peuvent traverser le filtre pour être directement mémorisée dans une mémoire MFT à cet effet.

L'unité centrale MPU traite les différents paramètres du guide électronique qui sont envoyés au poste de télévision.

Ce qui est couramment utilisé comme critère de filtre est simplement le descripteur de la chaîne. En effet, sur une offre de 130 programmes, seules une vingtaine répondront seront susceptibles d'intéresser l'utilisateur du fait de la langue. Il va donc programmer son filtre en fonction des chaînes dont il pourra comprendre le contenu.

Ceci présente néanmoins l'inconvénient de le priver d'émissions qui seraient diffusées sur une chaîne principalement en finlandais par exemple mais en mode multi-langues dont celle de l'utilisateur.

C'est pour cela que, selon l'invention, le système, côté émission, prépare la table d'index FT des émissions répondant à des critères sélectionnés selon les préférences des utilisateurs dans la région considérée.

Ces critères concernent par exemple la langue, une catégorie très demandée (le sport par exemple) ou une offre spéciale.

Pour chaque critère choisi, on dispose d'une table identifiant d'une manière unique l'émission concernée dans la tranche horaire concernée.

Cette table est transmise avec les données audio/vidéos et stockées par le décodeur dans la mémoire MFT.

Lorsque l'utilisateur désire introduire le critère de tri tel que défini par le centre de gestion, les données de la table de ce critère sont transmises au filtre hardware qui ne laissera passer que les messages d'émissions remplissant la condition.

Grâce à cette structure, l'accès aux émissions remplissant cette condition est immédiate et sans charge supplémentaire pour l'unité centrale du décodeur.

Dans l'exemple qui nous intéresse, le système, à l'émission dispose des capacités suffisantes pour composer une telle table en tenant compte dé paramètres tels que la langue, que ce soit la langue principale ou secondaire (mode multi-langues). Une autre utilisation de ce type de table est la proposition d'une offre particulière. L'opérateur peut ainsi préparer un certain nombre d'émissions qui sont d'une qualité particulière et recommandée par un groupe d'expert. Ce type de sélection peut être lié à une offre promotionnelle d'achat.

L'invention concerne aussi un récepteur de télévision à péage destiné à recevoir des transmissions d'un centre de gestion, comprenant des entrées de commandes, une mémoire de travail (MFT), ce centre de gestion transmettant des informations textuelles pour former une grille de programmes, ces informations textuelles comprenant un index, une description du contenu, des droits d'accès, une langue, et sont transmises à un décodeur vidéo de texte du récepteur de télévision en vue de leur affichage, caractérisé en ce qu'il comprend une unité de filtrage de texte de premier niveau programmée en fonction d'un profil utilisateur, ladite unité de filtrage effectue une sélection selon le contenu d'une table d'index (FT) contenant, pour un critère donné, une liste d'index définissant les informations de programme remplissant le critère et destinée à l'affichage dans la grille, cette table (FT) étant composée et transmise par le centre de gestion puis mémorisée dans la mémoire de travail (MFT)

De plus, ce récepteur contient une mémoire pour les émissions précédemment consommées et qui détermine le profil utilisateur afin de filtrer les informations selon ce profil utilisateur.

## Revendications

1. Méthode de filtrage d'informations à partir d'un flux DATA de données comprenant les informations audio, vidéo et de contrôle transmises par un centre de gestion à une pluralité de récepteurs de télévision à péage basée sur le tri des d'informations textuelles destinées à l'affichage de grilles de programmes télévisuels, lesdits récepteurs comprenant un décodeur vidéo de texte, des entrées de commandes et une mémoire de paramètres utilisateur, cette grille étant composée à partir d'un premier jeu d'information textuelles issu des données de contrôle décrivant une émission et comprenant son index, la description du contenu, les droits d'accès, la langue, **caractérisée en ce qu'**elle consiste à :
- composer au moins un second jeu d'information définissant une table d'index (FT) par le centre de gestion regroupant les index des émissions remplissant au moins un critère de tri prédéfini,
- ajouter les données définissant la table (FT) aux données de contrôle du flux DATA
- transmettre au récepteur de télévision à péage lesdites données de contrôle comprenant ladite table d'index (FT),
- mémoriser ladite table d'index (FT) dans la mémoire (MFT) du récepteur,
- appliquer les paramètres de la table d'index (FT) à une unité de filtrage de texte du décodeur vidéo de texte si le critère de tri correspond avec celui désiré par l'utilisateur,
- recevoir les informations sortant de l'unité de filtrage de texte et les utiliser pour la préparation de l'affichage d'une grille de programmes.

2. Méthode selon la revendication 1, **caractérisée en ce qu'**elle consiste à composer une table pour chaque critère de sélection tel que la langue, la catégorie et/ou l'offre promotionnelle.

3. Méthode selon la revendication 1 ou 2, **caractérisée en ce qu'**elle consiste à constituer la table d'index (FT) avec le ou les émissions satisfaisant le critère de sélection par un identificateur de tranche horaire et un identificateur de rang dans cette tranche.

4. Méthode selon les revendications 1 à 3, **caractérisée en ce qu'**elle consiste à autoriser prioritairement l'affichage d'émissions dont le début est imminent.

5. Récepteur de télévision à péage destiné à recevoir des transmissions d'un centre de gestion, comprenant des entrées de commandes, une mémoire de travail (MFT), ce centre de gestion transmettant des informations textuelles pour former une grille de programmes, ces informations textuelles comprenant un index, une description du contenu, des droits d'accès, une langue, et sont transmises à un décodeur vidéo de texte du récepteur de télévision en vue de leur affichage, **caractérisé en ce qu'**il comprend une unité de filtrage de texte de premier niveau programmée en fonction d'un profil utilisateur, ladite unité de filtrage effectue une sélection selon le contenu d'une table d'index (FT) contenant, pour un critère donné, une liste d'index définissant les informations de programme remplissant le critère et destinée à l'affichage dans la grille, cette table (FT) étant composée et transmise par le centre de gestion puis mémorisée dans la mémoire de travail (MFT).

6. Récepteur de télévision à péage selon la revendication 5, **caractérisé en ce qu'**il comprend une mémoire de profil utilisateur constituée par une compilation des émissions précédemment achetées et **en ce que** l'unité de filtrage de texte autorise ou supprime l'affichage de texte en fonction du profil utilisateur.

## Patentansprüche

1. Verfahren des Datenfilterns, das von einem Datenfluss (DATA) ausgeht, der Audio-, Video- und Steuerdaten umfasst, die von einem Verwaltungszentrum an eine Mehrzahl von Abonnentenfernsehempfängem übermittelt werden, und das auf einem Auswählen der Textdaten beruht, die für die Anzeige eines Fernsehprogrammrasters bestimmt sind, wobei diese Empfänger einen Videotextdekodierer, Steuereingänge sowie einen Speicher für Benutzerparameter umfassen und diesen Raster aus einem ersten Textdatensatz zusammengesetzt ist, der von Steuerdaten stammt, die eine Sendung beschreiben und ihr Kennzeichen, die Beschreibung des Inhalts, die Zugriffsrechte und die Sprache umfassen, **dadurch gekennzeichnet, dass** das Verfahren darin besteht:
- durch das Verwaltungszentrum zumindest einen zweiten Datensatz zusammenzustellen, der eine Liste der Kennzeichen (FT) definiert, die die Kennzeichen der Sendungen zusammenfasst, die zumindest ein im Voraus definiertes Auswahlkriterion erfüllen,
- die diese Liste definierenden Daten (FT) zu den Steuerdaten des Datenflusses DATA hinzuzufügen,
- diese Steuerdaten einschliesslich dieser Kennzeichenliste (FT) an den Abonnentenfernsehempfänger zu übermitteln,
- diese Kennzeichenliste (FT) im Speicher (MFT) des Empfängers zu speichern,
- die Parameter der Kennzeichenliste (FT) auf eine Textfiltereinheit des Videotextdekodierers anzuwenden, sofern das Auswahlkriterion mit dem vom Benutzer gewünschten übereinstimmt,
- die von der Textfiltereinheit kommenden Daten zu empfangen und für die Vorbereitung der Anzeige eines Programmrasters zu verwenden.

2. Verfahren gemäss Anspruch 1, **dadurch gekennzeichnet, dass** es darin besteht, eine Liste für jedes Auswahlkriterion wie die Sprache, die Kategorie und/oder das Werbeangebot aufzustellen.

3. Verfahren gemäss Anspruch 1 oder 2, **dadurch gekennzeichnet, dass** es darin besteht, eine Kennzeichenliste (FT) mit der oder den Sendungen zusammenzustellen, die das Auswahlkriterion erfüllen, und zwar durch eine Kennung der Sendezeit und eine Kennung des Rangs in dieser Sendezeit.

4. Verfahren gemäss den Ansprüchen 1 bis 3, **dadurch gekennzeichnet, dass** es darin besteht, vorzüglich die Anzeige derjenigen Sendungen zu autorisieren, deren Beginn unmittelbar bevorsteht.

5. Abonnentenfemsehempfänger, dafür bestimmt, Übermittlungen von einem Verwaltungszentrum zu empfangen, und Steuereingänge sowie einen Arbeitsspeicher (MFT) umfassend, wobei dieses Verwaltungszentrum Textdaten übermittelt, um einen Programmraster zu bilden, und wobei diese Textdaten ein Kennzeichen, eine Beschreibung des Inhalts, Zugriffsrechte sowie eine Sprache enthalten und zum Zweck der Anzeige zu einem Videotextdekodierer des Fernsehempfängers übermittelt werden, **dadurch gekennzeichnet, dass** er eine Textfiltereinheit des ersten Niveaus umfasst, die in Abhängigkeit von einem Benutzerprofil programmiert ist und eine Auswahl gemäss dem Inhalt einer Kennzeichenliste (FT) trifft, die für ein gegebenes Kriterion eine Liste von Kennzeichen enthält, die die Programminformationen definiert, die das Kriterion erfüllen, und dazu bestimmt ist, im Raster angezeigt zu werden, wobei diese Liste (FT) durch das Verwaltungszentrum aufgestellt und übermittelt, dann im Arbeitsspeicher (MFT) gespeichert wird.

6. Abonnentenfernsehempfänger gemäss Anspruch 5, **dadurch gekennzeichnet, dass** er einen Speicher des Benutzerprofils umfasst, das aus einer Zusammenstellung der früher gekauften Sendungen besteht, und dadurch, dass die Textfiltereinheit die Anzeige von Text in Abhängigkeit vom Benutzerprofil autorisiert oder unterdrückt.

## Claims

1. Method for filtering information from a data stream (DATA) comprising the audio, video and control information transmitted by a control center to a plurality of Pay-TV receivers based on the sorting of text information destined to the display of program television grid comprising a text video decoder, control inputs and a memory of user parameters, this grid being defined from a first set of text information issued from the control data describing an event and comprising its index, the content description, the access rights, the language, **characterized in that** it consists in:
- creating by the control center of at least a second set of information defining an index table (FT) according to a predefined sorting criteria,
- adding the data defining the table (FT) to the control data of the data stream DATA
- transmitting said index table (FT) to the Pay-TV receivers,
- receiving and memorizing said table (FT) in the memory (MFT) of the text video decoder,
- if the desired criteria corresponds with the one wanted by the user, applying the parameters of the index table (FT) to a first level text filtering unit,
- receiving the information coming from the filtering unit and using them to display a program grid.

2. Method according to claim 1, **characterized in that** it consists of creating a table for each desired criteria such as a table for the linguistic criteria, a table for the category criteria and/or a table for the criteria of the promotional offer.

3. Method according to claim 1 or 2, **characterized in that** it consists in constituting the index table (FT) with the program(s) that satisfy the selection criteria by a time span identifier and a rank identifier in this time span.

4. Method according to the claims 1 to 3, **characterized in that** it consists in authorizing primarily the display of programs for which the start is upcoming.

5. Pay-TV receiver for receiving transmissions from a control center, comprising a control inputs, a working memory (MFT), this center transmitting a first set of data describing an event and comprising its index, the content description, the access rights, the language so as to define a television program grid through a program grid video decoder, **characterized in that** it includes a first level text filtering module programmed in function of a user profile, said filtering module performs a selection according to the content of an index table (FT) comprising, for a given criteria, an index list defining the program information fulfilling the criteria and destined to the display in the grid, this table being created and transmitted by the control center and memorized in the main memory (MFT).

6. Pay-TV receiver according to claim 5, **characterized in that** it includes a user profile memory consisting in a compilation of the programs previously bought and **in that** the text filtering module authorizes or suppresses the text displayed in function of the user profile.
